# EUROPEAN PATENT SPECIFICATION

(11) **EP 3 880 386 B1**
(45) Date of publication and mention of the grant of the patent: **03.01.2024**
(21) Application number: 19798685.4
(22) Date of filing: 13.11.2019
(51) Int. Cl.: B22F 1/10, B22F 1/12, B22F 10/18, B29C 64/118, B33Y 10/00, B33Y 70/00, C04B 35/01, C04B 35/111, C04B 35/119, C04B 35/46, C04B 35/486, C04B 35/56, C04B 35/565, C04B 35/58, C04B 35/638, C04B 35/626, C04B 35/634

(54) **COMPOSITION FOR 3D PRINTING**
ZUSAMMENSETZUNG ZUM 3D-DRUCKEN
COMPOSITION POUR IMPRESSION 3D

(30) Priority: 13.11.2018 EP 18205871; 04.01.2019 EP 19305011
(43) Date of publication of application: 22.09.2021
(73) Proprietor: Nanoe, 91160 Ballainvilliers (FR)
(72) Inventor: BOUCHET-DOUMENQ, Guillaume, 91170 Viry-Châtillon (FR); DE LA LANDE DE CALAN, Guillaume, 75014 Paris (FR)
(74) Representative: Icosa
(86) International application number: PCT/EP2019/081173
(87) International publication number: WO 2020/099484

(56) References cited:
- CN-A- 108 503 939
- US-B1- 6 592 695
- GORJAN LOVRO ET AL: "Kinetics and equilibrium of Eco-debinding of PZT ceramics shaped by thermoplastic extrusion", JOURNAL OF THE EUROPEAN CERAMIC SOCIETY, ELSEVIER SCIENCE PUBLISHERS, BARKING, ESSEX, GB, vol. 37, no. 16, 6 May 2017 (2017-05-06), pages 5273-5280, XP085211142, ISSN: 0955-2219, DOI: 10.1016/J.JEURCERAMSOC.2017.04.063

## Description

### FIELD OF INVENTION

The present invention relates to compositions suitable for 3D printing in the form of filaments, or other 3D printing feeding forms. The composition of the invention comprises: a powder, which may be a metal and/or ceramic powder, a binder and a copolymer. The invention further relates to coils made of filaments of the composition, and to devices able to operate and use the filaments/and or the coils for manufacturing tridimensional objects. The invention also relates to a method for producing a shaped green body by 3D printing as well as to a shaped green body or a shaped body obtained by said method.

### BACKGROUND OF INVENTION

Nowadays, there is an increasing demand of 3D printing technologies and consumables. Most of the currently available 3D printing technologies concern the 3D printing of plastic objects. Hence, limited approaches have been proposed for ceramic and/or metallic object printing. Most of such methods enable implement bed techniques and are costly.

The fused deposition modelling (FDM) process is increasingly being used for manufacturing consumer goods. FDM is considered as an affordable and precise method for 3D printing.

Generally, FDM works by laying down material in layers. In FDM, the model (or part of it) is produced by extruding small beads or streams of material which harden immediately to form layers. In this technique, a filament of thermoplastic material is fed into an extrusion nozzle head (3D printer extruder). The nozzle head heats the material and turns the flow on and off. Typically, stepper motors or servo motors are employed to move the extrusion head and adjust the flow. The printer usually has 3 axes of motion.

It is known that volumetric flow errors of the melted thermoplastic material may compromise the quality of the printed product. Thus, the thermoplastic composition and filament itself has a significant effect on the quality of the printed object. Indeed, the thermoplastic filament needs to be sufficiently rigid so as to be gripped by the extruder, flexible so as to be foiled into a coil and capable of being inserted within the extruder's tubes and of course easy to be handled without breaking.

It is to be pointed out that such mechanical optimizations should not take place at the expense of the filament's or the printed object's thermoplastic properties. Indeed, the filament should melt at the typical 3D printing temperatures while rapidly solidifying at lower temperatures.

In the particular case of ceramic or metal FDM 3D printing, a green body is firstly obtained. The green body is usually debinded from the non-ceramic or non-metal material and sintered to the final form of the 3D printed object. Sintering takes place by thermal treatment of the green body. Hence, the formerly melted material should not melt during the sintering step. Furthermore, the evaporated and/or calcinated material during the sintering should not compromise the integrity of the printed object.

In view of the above, there is a need for new feedstock compositions for 3D printing devices which can be formed into a filament of constant diameter and which meets the hereinabove mentioned mechanical and thermoplastic requirements.

The development of efficient compositions for ceramic and/or metallic being an unmet need, it was an object of the invention to provide a novel feedstock material suitable for 3D printing devices meeting the above outlined criteria.

CN108 503 939 A discloses a composition for 3D printing, said composition being in the form of a filament and comprising a ceramic powder, a paraffin binder and poly (ethylene-vinyl acetate). US 6 592 695 B1 and G. Lovro, Journal of the European Ceramic Society,vol. 37, no. 16, pages 5273-5280 disclose similar features.

### SUMMARY

In a first aspect, this invention relates to a composition suitable for 3D printing according to the appended claims.

According to the invention, medium vinyl acetate proportion poly (ethylene-vinyl acetate) comprises 4 % to 30 % (w/w) of vinyl acetate proportion, relative to the poly (ethylene-vinyl acetate) weight and high vinyl acetate proportion poly (ethylene-vinyl acetate) comprises at least 35 % (w/w) of vinyl acetate proportion, relative to the poly (ethylene-vinyl acetate) weight.

In one embodiment, the mixture of medium and high vinyl acetate proportion poly (ethylene-vinyl acetate) is in an amount ranging from 10% to 48% (v/v), preferably from 13% to 37% (v/v) in volume relative to the total composition.

In one embodiment, the medium to high vinyl acetate proportion poly (ethylene-vinyl acetate) is in a 3:1 to 1:1 volume ratio.

In a particular embodiment, the poly (ethylene-vinyl acetate) is mixture of poly (ethylene-vinyl acetate) comprising about 20 % (w/w) of vinyl acetate proportion; and poly (ethylene-vinyl acetate) comprising about 40 % (w/w) of vinyl acetate proportion, relative to the poly (ethylene-vinyl acetate) weight.

According to the invention, the ceramic and/or metal powder is selected from ceramic powder comprising or consisting of one or more minerals, preferably selected from native elements, carbides, sulfides, halides, oxides, hydroxides, carbonates, borates, sulfates, chromates, nitrates, molybdates, tungstates, phosphates, arsenates, vanadates, silicates and aluminosilicates; and metal powder comprising or consisting of one or more component selected from alkali metals, alkaline earth metals, lanthanides, actinides, transition metals, poor metals, metalloids, metal oxides, metal carbides, metal borides and metal nitrides

The ceramic and/or metal powder may present a specific surface ranging from 0.5 to 30 m²/g measured by a surface area analyzer, preferably said analyzer using a gas sorption method.

In one embodiment, the composition in the form of filament of the present invention presents a diameter of 1.75 or 2.75 mm. In one embodiment, the filament of the present invention presents a shore A hardness of at least 85 at 20°C. According to one embodiment, the shore A hardness is measured by a Shore Hardness Tester, preferably the Shore Hardness Tester marked by SAUTER^{®}, more preferably the device HBA 100-0 Shore Hardness Tester marked by SAUTER^{®}.

In a second aspect, the invention relates to a filament coil comprising at least one composition of the invention.

In a third aspect, the invention relates to a 3D printer for producing shaped bodies. The 3D printer of the invention comprises the composition or the filament coil of the present invention.

The invention further relates to a method for producing a shaped body, said method comprising:
a) feeding 3D modeling printer, preferably a Fused Deposition Modeling printer, with a filament of the invention; then
b) printing the shaped green body; then
c) optionally debinding the green body by removing the binder of the filament composition by immersing the green body in a solvent, preferably selected from a group consisting of acetone, hexane, heptane, gasoline, ethyl acetate, ethanol, methanol, propanol or water;
d) Sintering the object of step (b) or step (c) by heating, leading to the shaped body; and
e) optionally smoothing the printed shaped green body of step (b) and/or the shaped body of step (d).

In one embodiment, the solvent of step (c) is selected from a group consisting of acetone, hexane, heptane, gasoline, ethyl acetate, ethanol, methanol, propanol or water.

In one embodiment, the smoothing step (d) is by contacting the surface of the shaped green body of step (b) and/or the surface of the shaped body of step (d) with a solvent selected from hexane, heptane, octane and mixtures thereof; gasoline, white spirit benzene; toluene; ortho-, para-, or meta - dimethylbenzene and mixtures thereof; tetrahydrofuran and 2-methyltetrahydrofuran.

In one embodiment, the the sintering is by heating at a temperature ranging from about 800°C to about 1700°C.

Lastly, the invention relates to a shaped green body or a shaped body obtainable by the method according to any one of the previously described embodiments.

### DEFINITIONS

In the present invention, the following terms have the following meanings:
- **"About":** preceding a figure means plus or less 10% of the value of said figure.
- **"Binder"** refers to any component in a composition comprising a metal and/or ceramic powder, able to (i) agglomerate the metal and/or ceramic powder of said composition and optionally the others components of said composition; and (ii) that may be removed by a debinding step using practical means such as for example by chemical means.
- **"Ceramic"** refers to any clay-based material or any non-metallic and inorganic material, obtained upon heated. The term "ceramic" also includes any component encompassed by the definition of "ceramic" given by the American Society for Testing and Materials (ASTM) and that refers to any compound having a vitrified body or not, comprising a crystalline or partially crystalline structure, or of glass, and which is formed of substantially inorganic and non-metallic substance, by a melt which solidifies upon cooling, or which is formed and matured into same time or later by the action of heat. According to one embodiment, the ceramic is a porous ceramic such as pottery and faience. According to one embodiment, the ceramic is a vitrified ceramic such as stoneware and porcelain.
- **"Ceramic injection molding (CIM)"** refers to any manufacturing process used to mass produce ceramic components or ceramic/metal composite, preferably with complex geometries. According to one embodiment, the CIM comprises four steps: mixing, injection, debinding and sintering.
- **"Ceramic and metal powder"** refers to any material under the form of a powder (i) either comprising a ceramic powder and a metallic powder, (ii) or which is a composite powder of a ceramic as defined above and a metal as defined below.
- **"Fatty alcohol"** refers to a linear aliphatic primary alcohol.
- **"Filament":** In the present description filament designates a 3D printer feeding form or **feedstock composition** that has the shape of a fine wire. Equivalent and interchangeable 3D printing feeding forms may be selected from at least one bullion, at least one rod or stick, at least one pellet or granule. A person skilled in the art can easily determine the form of the 3D printing material, depending on the type of the 3D printer used.
- **"Green body"** refers to a shaped object of a mixture comprising the ceramic and or metallic material and various organic or inorganic additives. In one embodiment, the organic additives may be a mixture of polymers that in some cases, is removed by chemical or thermic means such as debinding and/or sintering.
- **"Melt flow index":** The melt flow index (MFI) is a measure of the ease of flow of the melt of a thermoplastic polymer. It is defined as the mass of polymer, in grams, flowing in ten minutes through a capillary of a specific diameter and length by a pressure applied via prescribed alternative gravimetric weights for alternative prescribed temperatures. Typically, the MFI of polyolefins such as polyethylenes is measured at 190°C. Melt flow rate is an indirect measure of molecular weight, with high melt flow rate corresponding to low molecular weight. MFI is generally recognized in the art and protocols for measuring MFI are well-established in the art. For example, according to the ISO 1133-1 standard, the procedure for determining MFI is as follows:
   - A small amount of the polymer sample (around 4 to 5 grams) is taken in the specially designed MFI apparatus. A die with an opening of typically around 2 mm diameter is inserted into the apparatus.
   - The material is packed properly inside the barrel to avoid formation of air pockets.
   - A piston is introduced which acts as the medium that causes extrusion of the molten polymer.
   - The sample is preheated for a specified amount of time: 5 min at 190 °C for polyethylene.
   - After the preheating a specified weight is introduced onto the piston. Examples of standard weights are 2.16 kg, 5 kg, etc.
   - The weight exerts a force on the molten polymer and it immediately starts flowing through the die.
   - A sample of the melt is taken after the desired period of time and is weighed accurately.
- MFI is expressed in grams of polymer per 10 minutes of duration of the test.
   - **"Metal"** refers to any element of the periodic classification selected from alkali metals, alkaline earth metals, lanthanides, actinides, transition metals, poor metals, and metalloids. According to one embodiment, the term "metal" also refers to any compound in which the corresponding atoms are linked by a metallic bond.
   - **"Spinel"** refers to a nature! magnesium aluminate.

### DETAILED DESCRIPTION

This invention relates to a composition suitable for 3D printing that comprises:
- a metal and/or ceramic powder;
- a binder; and
- a copolymer, preferably poly (ethylene-vinyl acetate), hereinafter referred to as PEVA, more preferably a mixture of PEVAs having various grades in acetate.

According to one embodiment, the ceramic and/or metal powder is sinterable.

### Metal powder

The metal powder comprises or consists of one or more component selected from alkali metals, alkaline earth metals, lanthanides, actinides, transition metals, poor metals, metalloids, metal oxides, metal carbides, metal borides and metal nitrides.

According to one embodiment, the metal powder may be any material suitable to be involved in a Metal Injection Molding (MIM), preferably is an alloy, more preferably is selected from alloys of cobalt-chrome, stainless steel, titanium alloys and tungsten carbides.

According to one embodiment, the metal powder is selected from yttrium, yttrium oxide, copper, tan, aluminum, cerium, cerium oxides, uranium, uranium oxides, iron, iron oxides, steel, tungsten, tungsten carbide, strontium titanate, silicon carbide, silicon dioxide, aluminum oxide, zirconium dioxide, titanium dioxide, transition metal oxides such as cobalt dioxide or manganese dioxide, barium, barium titanate, lead zirconate titanate (LZT) and their mixtures thereof.

According to one embodiment, the metal powder is a magnetic powder, preferably a powder comprising or consisting of iron, iron oxides and/or nickel.

According to one embodiment, the metal powder is a piezoelectric powder, preferably selected from titanates, ferrites, tantalates, nobiates and tungsten-bronze compounds, more preferably from barium titanate, lead titanate, potassium nobiate, lithium nobiate, bismuth ferrite, lithium tantalate and lead zirconate titanate (LZT).

In one embodiment, the composition comprises a metal powder such as for example stainless steel.

According to one embodiment, the metal powder comprises or consist of any material that may be sintered.

### Ceramic powder

The ceramic powder comprises or consist of one or more minerals, preferably selected from native elements, carbides, sulfides, halides, oxides, hydroxides, carbonates, borates, sulfates, chromates, nitrates, molybdates, tungstates, phosphates, arsenates, vanadates, silicates and aluminosilicates.

According to one embodiment, the ceramic powder comprises or consist of any material that may be sintered.

According to one embodiment, the ceramic powder is a clay, that-is-to say a silicate- or aluminosilicate-based material. According to one embodiment, the ceramic powder is a porcelain, a faience, a pottery or a stoneware.

According to one embodiment, the native element is selected from carbon, sulfur, native silver, native gold, native copper and silicide.

According to one embodiment, the carbide may be a silicon carbide or a tungsten carbide. According to one embodiment, the ceramic powder may be any material suitable to be involved in a Ceramic Injection Molding (CIM).

### Ceramic/Metal powder

According to one embodiment, the ceramic and metal powder comprises or consists of any powder of one or more metals and ceramics as defined above.

According to one embodiment, the ceramic and metal powder comprises or consists of any material that may be sintered.

In one embodiment, the composition comprises a ceramic powder selected from alumina, zirconia toughened alumina, zirconium oxide, zirconium oxide-b, silicon carbide, tungsten carbide, cobalt doped tungsten and mixtures thereof.

According to one embodiment, the ceramic and/or metal powder is selected from alumina, zirconia toughened alumina, zirconium oxide, zirconium oxide-b (black zirconia), silicon carbide, silicon, titanium dioxide, tungsten, tungsten carbide and stainless steel powders.

### Binder

The binder is one or more components of the group selected from parabens, paraffin, esters, carboxylic acids, phenols, diphenols, fatty alcohols, sugar, polymers such as polyolefins, polacrylates, polymethacrylates, poly(alkylene glycol)s, polyamides, polyvinylics, polystyrenes polyacetals, polyesters and their copolymers thereof.

According to one embodiment, the paraben may be n-octyl 4-hydroxybenzoate, propyl 4-hydroxybenzoate or 4-hydroxybenzoate.

According to one embodiment, the ester is methyl octadecanoate, 2-butoxy ethanol acetate, glycerol monostearate, zinc octadecanoate, dimethyl phtalate or methyl-3-hydroxybenzoate.

According to one embodiment, the carboxylic acid is octadecanoic acid, benzoic acid, 2-hydroxybenzoic acid or decanoic acid.

According to one embodiment, the phenol is 4,4'-dihydroxy-2,2-diphenylpropane, 1,2,3-trihydroxybenzene, hydroxybenzene or 1,3-benzenediol.

According to one embodiment, the fatty alcohol is dodecan-1-ol or 1-docosanol.

According to one embodiment, the polymer is selected from homopolymers or copolymers of polyethylene glycol (PEG), polypropylene glycol) (PPG), polyvinyl alcohol (PVA), polyvinyl acetate (PVAc), polyvinyl butyrate (PVB), polymethacrylates such as poly(methyl methacrylate) (PMMA), polyacrylates such as poly(butyl acrylate). According to one embodiment, the binder comprises or consists of parabens, carboxylic acids, phenols, diphenols, paraffin, poly(alkylene glycol), polyolefins, polyvinylics and mixtures thereof.

According to one embodiment, the binder comprises or consists of parabens, carboxylic acids, phenols, diphenols, paraffin, polypropylene glycol, polyvinyl acetate, polyvinyl butyrate, polyethylene glycol, polyvinyl alcohol, low density polyethylene and mixtures thereof.

According to one embodiment, the binder comprises or consists of paraffin, polyethylene glycol, polyvinyl alcohol, low density polyethylene and mixtures thereof.

According to one embodiment, the invention relates to a composition suitable for 3D printing that comprises:
- a metal and/or ceramic powder;
- a binder selected from a group consisting of paraffine, polyethylene glycol, polyvinyl alcohol, low density polyethylene and mixtures thereof; and
- a copolymer, preferably poly (ethylene-vinyl acetate), hereinafter referred to as PEVA, more preferably a mixture of PEVAs having various grades in acetate.

The composition comprises the ceramic and/or metal powder in an amount ranging from 45% to 60 % in volume relative to the volume of the total composition. In one embodiment, the composition comprises the ceramic and/or metal powder in an amount ranging from 40 % to 55 %; or 45% to 50 % in volume relative to the volume of the total composition. According to one embodiment, the ceramic and/or metal powder represents 40%, 41%, 42%, 43%, 44%, 45%, 46%, 47%, 48%, 49%, 50%, 51%, 52%, 53%, 54%, 55%, 56%, 57%, 58%, 59% or 60% in volume relative to the volume of the total composition.

The ceramic and/or metal powder may present a specific surface ranging from 0.5 to 30 m²/g, preferably from 1 to 25 m²/g, even more preferably from 5 to 25 m²/g. In a preferred embodiment, when the powder presents a specific surface inferior or equal to 10 m²/g, the composition comprises ceramic and/or metal powder in an amount superior or equal to 55 % (v/v) in volume relative to the volume of the total composition.

The ceramic and/or metal powder may present a specific surface measured by a gas sorption method, preferably with the apparatus Gemini VII 2390t by Micromeritics^{®}, ranging from 0.5 to 30 m²/g, preferably from 1 to 25 m²/g, even more preferably from 5 to 25 m²/g. In a preferred embodiment, when the powder presents a specific surface measured by a gas sorption method, preferably with the apparatus Gemini VII 2390t by Micromeritics^{®}, inferior or equal to 10 m²/g, the composition comprises ceramic and/or metal powder in an amount superior or equal to 55 % (v/v) in volume relative to the volume of the total composition. According to one embodiment, the specific surface of the ceramic and/or metal powder, measured by a gas sorption method, is 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29 or 30 m²/g.

In a preferred embodiment, when the powder presents a specific surface superior or equal to 16 m²/g, the composition comprises ceramic and/or metal powder in an amount not exceeding 50 % (v/v) in volume relative to the volume of the total composition. According to one embodiment the specific surface is measured by a gas sorption method, preferably with the apparatus Gemini VII 2390t by Micromeritics^{®}.

The binder included in the composition of the invention may be any wax or may be any polymer that can be debinded from the ceramic and/or metal powder by practical means, such as for example by chemical means. In one embodiment, the binder is selected from paraffin, polyethylene glycol, polyvinyl alcohol, low density polyethylene and mixtures thereof. In one preferred embodiment, the binder is paraffin.

The binder according to the invention is present in an amount ranging from 7 % to 25 % (v/v) in volume relative to the volume of the total composition. In one embodiment, the binder is in an amount ranging from 10 % to 25 % or 15 % to 22 % (v/v). In one embodiment, the binder is about 15 % (v/v). In one embodiment, the binder is about 22 % (v/v). According to one embodiment, the amount of the binder in the composition is 7%, 8%, 9%, 10%, 11%, 12%, 13%, 14%, 15%, 16%, 17%, 18%, 19%, 20%, 21%, 22%, 23%, 24%, or 25 % (v/v) in volume relative to the volume of the total composition. In one embodiment, the copolymer or mixture of copolymer included in the composition of the invention is at least one poly (ethylene-vinyl acetate) (PEVA), which is a copolymer of ethylene and vinyl acetate. The weight percent vinyl acetate may vary in the at least one PEVA included in the composition of the invention from 10 to 40 %, with the remainder being ethylene.

Broadly speaking, there are three different types of PEVA copolymers, which differ in the vinyl acetate (VA) content and the way the materials are used:
- a PEVA copolymer with a low proportion of VA (more than 0% to 4 % by weight of VA to the total weight of the PEVA chain), which may be referred to as vinyl acetate modified polyethylene;
- a PEVA copolymer with a medium proportion of VA (more than 4% to 30 % by weight of VA to the total weight of the PEVA chain) which may be referred to as thermoplastic ethylene-vinyl acetate copolymer and is a thermoplastic elastomer material;
- a PEVA copolymer which is based on a high proportion of VA (greater than 30 %, preferably greater than 35%, more preferably greater than 40% by weight in VA to the total weight of the PEVA chain) which may be referred to as ethylene-vinyl acetate rubber.

The composition comprises at least 5 % (v/v) of at least one poly (ethylene-vinyl acetate), in volume relative to the total composition. In one embodiment, the composition comprises at least 8 % (v/v) of at least one poly (ethylene-vinyl acetate), in volume relative to the total composition. In one embodiment, the composition comprises at least 12 % (v/v) of at least one poly (ethylene-vinyl acetate), in volume relative to the total composition. In one embodiment, the composition comprises at least 15 % (v/v) of at least one poly (ethylene-vinyl acetate), in volume relative to the total composition. In one embodiment, the composition comprises at least 17 % (v/v) of at least one poly (ethylene-vinyl acetate), in volume relative to the total composition.

In one embodiment, the poly (ethylene-vinyl acetate) is in an amount ranging from 22 % to 37 % (v/v), in volume relative to the total composition.

The poly (ethylene-vinyl acetate) present in the composition of the invention is a mixture of medium and high vinyl acetate proportion poly (ethylene-vinyl acetate). The mixture comprises medium poly (ethylene-vinyl acetate) comprising more than 4 % to 30 % (w/w) of vinyl acetate, relative to the poly (ethylene-vinyl acetate) total weight; and high vinyl acetate proportion poly (ethylene-vinyl acetate) comprising at least 35 % (w/w) of vinyl acetate, relative to the poly (ethylene-vinyl acetate) weight.

In one embodiment, the mixture comprises medium poly (ethylene-vinyl acetate) comprising 12 % to 30 % (w/w) of vinyl acetate, relative to the poly (ethylene-vinyl acetate) total weight; and high vinyl acetate proportion poly (ethylene-vinyl acetate) comprising at least 35 % (w/w) of vinyl acetate, relative to the poly (ethylene-vinyl acetate) weight.

In one embodiment, the mixture comprises medium poly (ethylene-vinyl acetate) comprising 12 % to 30 % (w/w) of vinyl acetate, relative to the poly (ethylene-vinyl acetate) total weight; and high vinyl acetate proportion poly (ethylene-vinyl acetate) comprising about 40 % (w/w) of vinyl acetate, relative to the poly (ethylene-vinyl acetate) weight.

In one embodiment, the mixture comprises medium poly (ethylene-vinyl acetate) comprising 25 % to 30 % (w/w) of vinyl acetate, relative to the poly (ethylene-vinyl acetate) total weight; and high vinyl acetate proportion poly (ethylene-vinyl acetate) comprising about 40 % (w/w) of vinyl acetate, relative to the poly (ethylene-vinyl acetate) weight.

In one embodiment, the mixture comprises medium poly (ethylene-vinyl acetate) comprising 12 % to 25 % (w/w) of vinyl acetate, relative to the poly (ethylene-vinyl acetate) total weight; and high vinyl acetate proportion poly (ethylene-vinyl acetate) comprising at least 35 % (w/w) of vinyl acetate, relative to the poly (ethylene-vinyl acetate) weight.

In one particular embodiment, the poly (ethylene-vinyl acetate) is a mixture of poly (ethylene-vinyl acetate) comprising about 28 % (w/w) of vinyl acetate; and poly (ethylene-vinyl acetate) comprising about 40 % (w/w) of vinyl acetate, relative to the poly (ethylene-vinyl acetate) weight.

In one particular embodiment, the medium poly (ethylene-vinyl acetate) is Elvax^{®} 210W (DuPont ^{™}). In one particular embodiment, the high poly (ethylene-vinyl acetate) is Elvax^{®} 40W (DuPont ^{™}).

In one particular embodiment, the poly (ethylene-vinyl acetate) is a mixture of poly (ethylene-vinyl acetate) comprising about 20 % (w/w) of vinyl acetate; and poly (ethylene-vinyl acetate) comprising about 40 % (w/w) of vinyl acetate, relative to the poly (ethylene-vinyl acetate) weight.

In a preferred embodiment, mixture of medium and high vinyl acetate proportion poly (ethylene-vinyl acetate) is in a 3:1 to 1:1 ratio. According to one embodiment, the mixture of PEVA comprises 30% (w/w) of ËVA with medium VA proportion and 70% (w/w) of PEVA with high VA proportion. According to one embodiment, the mixture of PEVA comprises 30% (v/v) of ËVA with medium VA proportion and 70% (v/v) of PEVA with high VA proportion.

In an embodiment, when the powder is a metal powder, the composition comprises a mixture of medium and high vinyl acetate proportion poly (ethylene-vinyl acetate) in a volume ratio of about 3:1.

In an embodiment, when the powder is a ceramic powder, the composition comprises a mixture of medium and high vinyl acetate proportion poly (ethylene-vinyl acetate) in a volume ratio of about 1:1.

In one embodiment, the medium vinyl acetate proportion poly (ethylene-vinyl acetate) presents a melt flow index ranging from 2 to 30 g/10min (190°C, 2.16kg). In one embodiment, the medium vinyl acetate proportion poly (ethylene-vinyl acetate) presents a melt flow index ranging from 8 to 20 g/10min (190°C, 2.16kg). In one embodiment, the medium vinyl acetate proportion poly (ethylene-vinyl acetate) presents a melt flow index of 8 g/10min (190°C, 2.16kg). In one embodiment, the medium vinyl acetate proportion poly (ethylene-vinyl acetate) presents a melt flow index of 19 g/10min (190°C, 2.16kg).

In one embodiment, the high vinyl acetate proportion poly (ethylene-vinyl acetate) presents a melt flow index ranging from 35 to 400 g/lOmin (190°C, 2.16kg). In one embodiment, the high vinyl acetate proportion poly (ethylene-vinyl acetate) presents a melt flow index ranging from 40 to 100 g/lOmin (190°C, 2.16kg). In one embodiment, the high vinyl acetate proportion poly (ethylene-vinyl acetate) presents a melt flow index ranging from 40 to 80 g/lOmin (190°C, 2.16kg). In one embodiment, the high vinyl acetate proportion poly (ethylene-vinyl acetate) presents a melt flow index ranging from 40 to 60 g/lOmin (190°C, 2.16kg). In one embodiment, the high vinyl acetate proportion poly (ethylene-vinyl acetate) presents a melt flow index of about 55, about 56, about 57, about 58, about 59 or about 60 g/lOmin (190°C, 2.16kg). In one embodiment, the high vinyl acetate proportion poly (ethylene-vinyl acetate) presents a melt flow index of 57 g/lOmin (190°C, 2.16kg).

According to one embodiment, the composition comprises or consists of:
- 60% (v/v) of a metal and/or ceramic powder as defined above,
- 25% (v/v) of a binder as defined above, and
- 15% (v/v) of a mixture of PEVA copolymers as defined above.

According to one embodiment, the composition comprises or consists of:
- 60% (v/v) of a metal and/or ceramic powder as defined above,
- from 15% to 25% (v/v) of a binder as defined above, and
- from 15% to 25% (v/v) of a mixture of PEVA copolymers as defined above.

According to one embodiment, the composition comprises or consists of:
- 50% (v/v) of a metal and/or ceramic powder as defined above,
- from 15% to 25% (v/v) of a binder as defined above, and
- from 25% to 35% (v/v) of a mixture of PEVA copolymers as defined above.

### Filament

As previously discussed, the invention relates to a composition as defined above, in the form of a filament suitable for 3D printing.

The diameter of the filament can be determined on the basis of the type of impression and easily determined by a person skilled in the art.

In one embodiment, the filament presents a diameter from about 1 to about 3 mm. In one embodiment, the diameter ranges from about 1.75 to about 2.75 mm. In one embodiment, the diameter is 1.75 mm. In one embodiment, the diameter is 2.75 mm. According to one embodiment, the diameter of the filament is measured by an electronic slide gauge, preferably the electronic slide gauge is the RS Pro^{®} electronic digital caliper 150 mm/6.

In one embodiment, the diameter of the filament is regular throughout its length.

Furthermore, the advantageous mechanical properties of the filament do not restrain its length.

In one embodiment, the filament presents a length from about 1 to about 3000 m. In one embodiment, the filament length ranges from about 40 to about 1500 m. In one embodiment, the filament length ranges from about 80 to about 1200 m. In one embodiment, the filament length ranges from about 90 to about 1100 m.

In one embodiment, the filament is easy to flexible and not easy to break. In one embodiment, the filament has a shore A hardness of at least 85, at least 90 or at least 100 at 20°C. According to one embodiment, the filament has a radius curvature of breaking ranging from more than 0 to 7 cm, preferably from more than 0 to 5 cm, more preferably from 2 cm to 5 cm. According to one embodiment, the filament has a radius curvature of breaking ranging from 2 cm to 7 cm. According to one embodiment, the filament has a radius curvature of breaking of about 1 cm, 2 cm, 3 cm, 4 cm, 5 cm, 6 cm or 7 cm. According to one embodiment, the radius curvature of breaking is determined by the methods and devices well-known by the skilled artisan.

Advantageously, the filament is flexible and can be coiled.

According to one embodiment, the filament has a crushing resistance ranging from 20 MPa to 50 MPa, preferably from 25MPa to 40 MPa. According to one embodiment, the filament has a crushing resistance higher than 40MPa. According to one embodiment, the crushing resistance is determined by the methods and devices well-known by the skilled artisan.

Advantageously, when the filament has a crushing resistance of 40MPa or higher, an object may be printed from the filament of the invention with a printing outlet having a mean diameter of 0.2 mm or 0.4 mm.

Advantageously, when the filament has a crushing resistance ranging from 20 MPa to 40 MPa, an object may be printed from the filament of the invention with a printing outlet having a mean diameter of 0.8 mm or 0.6 mm.

### Coil

Thus, in a second aspect, the invention relates to a coil comprising at least one composition in the form of filament according to the invention.

In one embodiment, the coil has a weigh ranging from 100 g to 3 kg. In one embodiment, the coil has a weigh ranging from 300 g to 2.5 kg. In one embodiment, the coil has a weigh ranging from 400 g to 2.5 kg. In one embodiment, the coil has a weigh ranging from 500 g to 2 kg.

### Printer

In a third aspect, the invention relates to a device implementing the filament or the filament coil according to the invention. In one embodiment, the device is a 3D printer, preferably a FDM type 3D printer.

### Method

In a fourth aspect, the invention relates to a method for producing a shaped body, namely for the printing of a 3D object.

The method comprises the following steps:
a) Feeding a 3D modeling printer, preferably a Fused Deposition Modeling printer, with at least one filament of the present invention; then
b) Printing the shaped green body; then
c) Optionally debinding the green body by removing the binder of the filament composition by immersing the green body in a solvent; and
d) Sintering the object of step(b) or step (c) by heating, leading to the shaped body.

According to a first embodiment, the method comprises a debinding step in order to remove the binder from the green body. In one embodiment, the debinding step is carried out by immersing the green object in a solvent selected from acetone, hexane, heptane, gasoline, ethyl acetate, ethanol, methanol, propanol and water. In one embodiment, the solvent is acetone. In one embodiment, the solvent is an alkane selected from pentane, hexane, heptane or a mixture of alkanes such as for example gasoline.

In one embodiment, the green body is debinded by immersion in the solvent from 12h to 72h, preferably at room temperature.

The sintering step (d) is a thermal treatment at a temperature ranging from about 800°C to about 1700°C.

In one embodiment, metal-powder-containing green bodies are sintered at a temperature from about 800°C to about 1300°C, preferably under vacuum.

In one embodiment, ceramic-powder-containing green bodies are sintered at a temperature from about 1400°C to about 1700°C, preferably in the presence of air.

According to a second embodiment, the method does not comprise a debinding step. According to such embodiment, the binder is removed during the sintering step. In order to avoid the bubble formation during the evaporation and/or the calcination of the binder during the sintering; the heating takes place at a slow heating gradient.

In one embodiment, the heating gradient of step (d) is from 2°C/h to 10°C/h.

During 3D printing, namely FDM printing, parts are printed layer by layer, with typical layer thicknesses from 50µm to 300µm. This results in a rather rough surface condition, which requires post processing after sintering (such as re-machining or polishing) which significantly increases the price of the part, and more importantly sometimes can be a crippling problem in the case of inaccessible parts for the polishing (eg internal channels).

The method may further comprise at least one smoothing step. In one embodiment, the smoothing step is carried out on the green body, obtained after step (b). In one embodiment, the smoothing step is carried out on the debinded body, obtained after step (c). In one embodiment, the smoothing step is carried out on the shaped body, obtained after step (d). In one embodiment, the smoothing step is carried out on the debinded and sintered shaped body, obtained after step (d).

In one embodiment, the smoothing step is carried out twice, once on the green body, obtained after step (b) and once on the shaped body obtained after step (d). In one embodiment, the smoothing step is carried out twice, once on the green body, obtained after step (b) and once on the debinded and sintered shaped body obtained after step (d).

In one embodiment, the method comprises the following steps:
a) Feeding a 3D modeling printer, preferably a Fused Deposition Modeling printer, with at least one filament of the present invention; then
b) Printing the shaped green body; then
c) Optionally debinding the green body by removing the binder of the filament composition by immersing the green body in a solvent;
d) Sintering the object of step(b) or step (c) by heating, leading to the shaped body; and
e) optionally smoothing the printed shaped green body of step (b) and/or the shaped body of step (d).

In one embodiment, the method comprises the following steps:
a) Feeding a 3D modeling printer, preferably a Fused Deposition Modeling printer, with at least one filament of the present invention; then
b) Printing the shaped green body; then
c) Optionally debinding the green body by removing the binder of the filament composition by immersing the green body in a solvent;
d) Sintering the object of step(b) or step (c) by heating, leading to the shaped body; and
e) optionally smoothing the printed shaped green body of step (b).

In one embodiment, the method comprises the following steps:
a) Feeding a 3D modeling printer, preferably a Fused Deposition Modeling printer, with at least one filament of the present invention; then
b) Printing the shaped green body; then
c) Optionally debinding the green body by removing the binder of the filament composition by immersing the green body in a solvent;
d) Sintering the object of step(b) or step (c) by heating, leading to the shaped body; and
e) optionally smoothing the printed shaped green body of step (b) or the shaped body of step (d).

In one embodiment, the method comprises the following steps:
a) Feeding a 3D modeling printer, preferably a Fused Deposition Modeling printer, with at least one filament of the present invention; then
b) Printing the shaped green body; then
c) Optionally debinding the green body by removing the binder of the filament composition by immersing the green body in a solvent;
d) Sintering the object of step(b) or step (c) by heating, leading to the shaped body; and
e) optionally smoothing the printed shaped green body of step (b) and the shaped body of step (d).

Advantageously, the smoothing step takes place by contacting the surface of the shaped green body and/or the shaped body.

Smoothing by contacting 3D printed plastic objects with solvents is generally known in the art. Nevertheless, to the Applicant's knowledge, such smoothing step has not been described for 3D printed ceramic or metallic objects.

In one embodiment, the smoothing step is contacting the surface of the shaped green body and/or the shaped body with a solvent allowing the fading of the irregularities on the surfaces of the printed object.

In one embodiment, the solvent is suitable for solubilizing both the binder and the mixture of PEVA according to the present invention.

In one embodiment, the solvent is selected from hexane, heptane, octane and mixtures thereof; gasoline, white spirit (synonym of solvent naphtha, mixture of aliphatic, open-chain or alicyclic C7 to C12 hydrocarbons) benzene; toluene; ortho-, para-, or meta - dimethylbenzene and mixtures thereof; tetrahydrofuran, 2-methyltetrahydrofuran and mixtures thereof. In one embodiment, the solvent is selected from hexane, heptane, octane and mixtures thereof; gasoline, white spirit, benzene; toluene; ortho-, para-, or meta - dimethylbenzene and mixtures thereof; and tetrahydrofuran.

In one embodiment, the solvent is selected from benzene; toluene; ortho-, para-, or meta - dimethylbenzene and mixtures thereof. In one embodiment, the solvent is benzene. In one embodiment, the solvent is toluene. In one embodiment, the solvent is selected from hexane, heptane, octane and mixtures thereof; gasoline and white spirit. In one embodiment, the solvent is selected from hexane, heptane, octane and mixtures thereof; and gasoline. In one embodiment, the solvent is ortho-, para-, or meta - dimethylbenzene and mixtures thereof. In one embodiment, the solvent is tetrahydrofuran.

In one embodiment, the solvent is selected from benzene; toluene; ortho-, para-, or meta - dimethylbenzene and mixtures thereof; tetrahydrofuran, 2-methyltetrahydrofuran and mixtures thereof. In one embodiment, the solvent is selected from benzene; toluene; ortho-, para-, or meta - dimethylbenzene and mixtures thereof; and tetrahydrofuran.

In one embodiment, the solvent is selected from hexane, heptane, octane and mixtures thereof; gasoline and white spirit.

In one embodiment, the solvent is selected from benzene; toluene; ortho-, para-, or meta - dimethylbenzene and mixtures thereof. In one embodiment, the solvent is benzene. In one embodiment, the solvent is toluene. In one embodiment, the solvent is ortho-, para-, or meta - dimethylbenzene and mixtures thereof. In one embodiment, the solvent is tetrahydrofuran.

Contacting the surface of the shaped green body and/or the shaped body with the smoothing solvent may be carried out by any means known in the art.

In one embodiment, smoothing the shaped green body and/or the shaped body of the invention is by dipping in a solvent as previously described.

In one embodiment, smoothing the shaped green body and/or the sintered object of the invention is by brushing with the solvent as previously described.

In one embodiment, smoothing the shaped green body and/or the sintered object of the invention is by spraying the object with the solvent as previously described.

In one embodiment, smoothing the shaped green body and/or the sintered object of the invention is condensation onto the green body and/or the sintered object solvent vapors of a solvent as previously described.

In a last aspect, the invention relates to the use of a solvent selected from benzene; toluene; ortho-, para-, or meta - dimethylbenzene and mixtures thereof; tetrahydrofuran, 2-methyltetrahydrofuran and mixtures thereof, in the smoothing of a 3D printed ceramic or metal object.

In one embodiment, the solvent is selected from benzene; toluene; ortho-, para-, or meta - dimethylbenzene and mixtures thereof; and tetrahydrofuran. In one embodiment, the solvent is selected from benzene; toluene; ortho-, para-, or meta - dimethylbenzene and mixtures thereof. In one embodiment, the solvent is benzene. In one embodiment, the solvent is toluene. In one embodiment, the solvent is ortho-, para-, or meta - dimethylbenzene and mixtures thereof. In one embodiment, the solvent is tetrahydrofuran.

### EXAMPLES

The present invention is further illustrated by the following examples.

### Example 1: obtained compositions/filaments

3D printing compositions were prepared using:
Either a composition A consisting of:
- 50% (v/v) of a ceramic and/or metal powder selected from alumina, zirconia toughened alumina, zirconium oxide, zirconium oxide-b and stainless steel powders; and
- 50% (v/v) of a binder (preferably paraffin) and a mixture of PEVA copolymers.

Or a composition B consisting of:
- 60% (v/v) of a ceramic and/or metal powder selected from alumina, zirconia toughened alumina, zirconium oxide, zirconium oxide-b (black zirconia), silicon carbide, silicon, titanium dioxide, tungsten, tungsten carbide and stainless steel powders; and
- 40% (v/v) of a binder (preferably paraffin), and a mixture of PEVA copolymers.

The used PEVA 20 was Elvax^{®} 210W (DuPont ^{™}, 28 % w/w Vinyl Acetate comonomer content, Melt flow rate ( 190°C/2.16kg ) 400 g/10 min, Melting Point ( DSC ) 60 °C).

The used PEVA 40 was Elvax^{®} 40W (DuPont ^{™}, 40 % w/w Vinyl Acetate comonomer content, Melt flow rate ( 190°C/2.16kg ) 52 g/10 min, Melting Point ( DSC ) 47°C).

The prepared compositions are presented in table 1.

**Table 1. Compositions of the invention**

| Compositions (% v/v) | Ceramic and/or metal Powder | paraffin | PEVA 40 | PEVA 20 |
|---|---|---|---|---|
| A1 | 50 | 15 | 17.5 | 17.5 |
| A2 | | 22 | 11.5 | 11.5 |
| A3 | | 15 | 26.5 | 8.5 |
| B1 | 60 (stainless steel) | 16 | 12 | 12 |
| B2 | 60 (stainless steel) | 18 | 11 | 11 |

The ingredients were kneaded at 120°C until a homogenous composition, which was sequentially extruded through a twin-screw extruder, ensuring the homogenous dispersion of the powder within the obtained compositions.

Furthermore, a composition comprising solely PEVA 40 was prepared under the same conditions.

Then, the obtained compositions were extruded through a single-screw extruder in the form of filaments.

Once cooled to room temperature, the obtained filaments presented sufficient elasticity to be coiled.

### Example 2: filament mechanical properties

The filaments obtained in example 1 were tested on two 3D printing machines, Flashforge Replicator^{®} and Ultimaker 3^{®}.

All filaments were rigid enough so as to be gripped by the extruder of the 3D printer and flexible enough to be guided within the 3D printer system.

On the contrary, the filament comprising only PEVA 40 were too soft. The softness of said filament did not allow its feeding into the 3D printer feeding system, while the melted material could not be extruded since the filament was not hard enough in order to push the melted material.

### Example 3: 3D printed objects

Green bodies were obtained by implementing the filaments of example 1 within the 3D printing systems of Example 2.

The obtained green bodies were debinded in acetone for 3 days at 20°C or in hexane overnight at 20°C.

Once dried, the debinded green bodies were sintered.

Metal-powder-containing green bodies we sintered by thermal treatment at 1250°C under vacuum.

Ceramic-powder-containing green bodies we sintered by thermal treatment at 1400°C in the presence of air.

The 3D printed objects were dense and at least 80% compliant to the prototype used for the 3D printing.

### Example 4: Comparison of compositions comprising PEVA with different vinyl acetate amount in the PEVA chain.

The aim of this experiment is to compare the mechanical properties of a filament of the invention (comprising a mixture of high PEVA and medium PEVA), with filament comprising only either high PEVA, or medium PEVA.

The filament consists of 60% (v/v) of stainless steel, 16% (v/v) of paraffin and 24% (v/v) of PEVA.

Then, the radius of curvature for breaking each filament and their corresponding crushing resistance were measured.

The results are shown in Table 2.

**Table 2. Effect of the VA portion in PEVA chains on the mechanical properties of the corresponding filaments**

| | PEVA with low portion of VA | PEVA with medium portion of VA | PEVA with high portion of VA | PEVA of the invention |
|---|---|---|---|---|
| | | | | (with 30% of medium and 70% of high portions of VA) |
| Radius curvature for breaking the filament (cm) | No possible extrusion | > 10 | 4 | 5 |
| Crushing resistance (MPa) | 45 (on the raw material) | 38 | 12 | 40 |

The results evidence that a mixture of PEVA having both high and medium VA portions allow achieving improved mechanical properties of a filament comprising said mixture. A synergic effect is observed on the radius curvature and the crushing resistance.

Advantageously, the 3D printed objects obtained from the filament of the invention are solid but flexible enough to be easily removed from the printing surface and handled without breaking them before the sintering step.

## Claims

1. A composition suitable for 3D printing, said composition being in the form of a filament and comprising:
- 45 to 60 % (v/v) of a metal and/or ceramic powder selected from ceramic powder comprising or consisting of one or more carbides, sulfides, halides, oxides, hydroxides, carbonates, borates, sulfates, chromates, nitrates, molybdates, tungstates, phosphates, arsenates, vanadates, silicates and aluminosilicates; and metal powder comprising or consisting of one or more component selected from alkali metals, alkaline earth metals, lanthanides, actinides, transition metals, poor metals, metalloids, metal oxides, metal carbides, metal borides and metal nitrides;
- 7 % to 25% (v/v) of a binder which is one or more components of the group selected from parabens, paraffin, esters, carboxylic acids, phenols, diphenols, fatty alcohols, sugar, polymers such as polyolefins, polyacrylates, polymethacrylates, poly(alkylene glycol)s, polyamides, polyvinylics, polystyrenes polyacetals, polyesters and their copolymers thereof; and
- at least 5 % (v/v) of a mixture of medium and high vinyl acetate proportion poly (ethylene-vinyl acetate); in volume relative to the total composition, wherein:
• medium vinyl acetate proportion poly (ethylene-vinyl acetate) comprises 4 % to 30 % (w/w) of vinyl acetate proportion, relative to the poly (ethylene-vinyl acetate) weight;
• high vinyl acetate proportion poly (ethylene-vinyl acetate) comprises at least 35 % (w/w) of vinyl acetate proportion, relative to the poly (ethylene-vinyl acetate) weight.

2. The composition according to claim **1,** wherein the mixture of medium and high vinyl acetate proportion poly (ethylene-vinyl acetate) is in an amount ranging from 10% to 48% (v/v), preferably from 13% to 37% (v/v) in volume relative to the total composition.

3. The composition according to claim **1** or claim **2,** wherein medium to high vinyl acetate proportion poly (ethylene-vinyl acetate) is in a 3:1 to 1:1 volume ratio.

4. The composition according to any one of claims **1** to **3,** wherein poly (ethylene-vinyl acetate) is mixture of poly (ethylene-vinyl acetate) comprising about 28 % (w/w) of vinyl acetate proportion; and poly (ethylene-vinyl acetate) comprising about 40 % (w/w) of vinyl acetate proportion, relative to the poly (ethylene-vinyl acetate) weight.

5. The composition according to any one of claims **1** to **4,** wherein the ceramic and/or metal powder presents a specific surface ranging from 0.5 to 30 m²/g, measured by a surface area analyzer, said analyzer using a gas sorption method.

6. The composition according to any one of claims **1** to **5,** wherein the filament presents a diameter of 1.75 or 2.75 mm.

7. The composition according to any one of claims **1** to **6,** wherein the filament presents a shore A hardness of at least 85 at 20°C.

8. A filament coil comprising at least one composition as described in any one of claims **1** to **7.**

9. A 3D printer for producing shaped bodies, said 3D printer comprising the composition according to any one of claims **1** to **7** or the filament coil according to claim **8.**

10. A method for producing a shaped body, said method comprising:
a) feeding 3D modeling printer, preferably a Fused Deposition Modeling printer, with a filament as described in any one of claims **1** to **7;** then
b) printing the shaped green body; then
c) optionally debinding the green body by removing the binder of the filament composition by immersing the green body in a solvent;
d) Sintering the object of step (b) or step (c) by heating, leading to the shaped body;and
e) optionally smoothing the printed shaped green body of step (b) and/or the shaped body of step (d).

11. The method according to claim **10,** wherein the solvent of step (c) is selected from a group consisting of acetone, hexane, heptane, gasoline, ethyl acetate, ethanol, methanol, propanol or water.

12. The method according to claim **10** or claim **11,** wherein the smoothing step (d) is by contacting the surface of the shaped green body of step (b) and/or the surface of the shaped body of step (d) with a solvent selected from hexane, heptane, octane and mixtures thereof; gasoline, white spirit, benzene; toluene; ortho-, para-, or meta - dimethylbenzene and mixtures thereof; tetrahydrofuran and 2-methyltetrahydrofuran.

13. The method according to any one of claims **10** to claim **12,** wherein the sintering is by heating at a temperature ranging from about 800°C to about 1700°C.

## Patentansprüche

1. Zusammensetzung, die für das 3D-Drucken geeignet ist, wobei die Zusammensetzung die Form eines Filaments hat, und umfasst:
- 45 bis 60 Vol.-% eines Metall- und/oder Keramikpulvers, ausgewählt aus Keramikpulver, umfassend oder bestehend aus einem oder mehreren Carbiden, Sulfiden, Halogeniden, Oxiden, Hydroxiden, Carbonaten, Boraten, Sulfaten, Chromaten, Nitraten, Molybdaten, Wolframaten, Phosphaten, Arsenaten, Vanadaten, Silikaten und Alumosilikaten; und Metallpulver, umfassend oder bestehend aus einer oder mehreren Komponenten, ausgewählt aus Alkalimetallen, Erdalkalimetallen, Lanthaniden, Aktiniden, Übergangsmetallen, schlechten Metallen, Metalloiden, Metalloxiden, Metallcarbiden, Metallboriden und Metallnitriden;
- 7 bis 25 Vol.-% eines Bindemittels, das eine oder mehrere Komponenten der Gruppe hat, ausgewählt aus Parabenen, Paraffinen, Estern, Carbonsäuren, Phenolen, Diphenolen, Fettalkoholen, Zucker, Polymeren wie Polyolefinen, Polyacrylaten, Polymethacrylaten, Poly(alkylenglykolen), Polyamiden, Polyvinylen, Polystyrolen, Polyacetalen, Polyestern und deren Copolymeren davon; und
- mindestens 5 Vol.-% eines Gemisches aus Poly(ethylen-Vinylacetat) mit mittlerem und hohem Vinylacetatanteil; im Volumen bezogen auf die Gesamtzusammensetzung, wobei:
• das Polyethylen-Vinylacetat mit mittlerem Vinylacetatanteil 4 Gew.-% bis 30 Gew.-% Vinylacetatanteil umfasst, bezogen auf das Gewicht des Poly(ethylen-Vinylacetats);
• das Poly(ethylen-Vinylacetat) mit hohem Vinylacetatanteil mindestens 35 Gew.-% Vinylacetatanteil umfasst, bezogen auf das Gewicht des Polyethylen-Vinylacetats.

2. Zusammensetzung nach Anspruch 1, wobei das Gemisch aus Poly(ethylenVinylacetat) mit mittlerem und hohem Vinylacetatanteil in einer Menge vorliegt, die im Bereich von 10 Vol.-% bis 48 Vol.-% liegt, vorzugsweise von 13 bis 37 Vol.-%, bezogen auf die Gesamtzusammensetzung.

3. Zusammensetzung nach Anspruch 1 oder Anspruch 2, wobei das Poly(ethylenVinylacetat) mit mittlerem bis hohem Vinylacetatanteil in einem Volumenverhältnis von 3:1 bis 1:1 vorliegt.

4. Zusammensetzung nach einem der Ansprüche 1 bis 3, wobei das Poly(ethylenVinylacetat) ein Gemisch aus Poly(ethylen-Vinylacetat) ist, das etwa 28 Gew.-% Vinylacetatanteil umfasst; und Poly(ethylen-Vinylacetat), das etwa 40 Gew.-% Vinylacetatanteil umfasst, bezogen auf das Gewicht des Poly(ethylen-Vinylacetats).

5. Zusammensetzung nach einem der Ansprüche 1 bis 4, wobei das Keramik- und/oder Metallpulver eine spezifische Oberfläche aufweist, die im Bereich von 0,5 bis 30 m²/g liegt, gemessen mit einem Oberflächenbereichanalysator, wobei der Analysator ein Gassorptionsverfahren verwendet.

6. Zusammensetzung nach einem der Ansprüche 1 bis 5, wobei das Filament einen Durchmesser von 1,75 oder 2,75 mm aufweist.

7. Zusammensetzung nach einem der Ansprüche 1 bis 6, wobei das Filament eine Härte nach Shore A von mindestens 85 bei 20 °C aufweist.

8. Filamentspule, mindestens eine Zusammensetzung umfassend, wie in einem der Ansprüche 1 bis 7 beschrieben.

9. 3D-Drucker zur Herstellung von Formkörpern, wobei der 3D-Drucker die Zusammensetzung nach einem der Ansprüche 1 bis 7 oder die Filamentspule nach Anspruch 8 umfasst.

10. Verfahren zur Herstellung eines Formkörpers, wobei das Verfahren umfasst:
a) Beschicken eines 3D-Modellierungsdruckers, vorzugsweise eines Schmelzschichtung-Modellierungsdruckers, mit einem Filament, wie in einem der Ansprüche 1 bis 7 beschrieben; danach
b) Drucken des geformten Grünkörpers; danach
c) optional Entbindern des Grünkörpers durch Entfernen des Bindemittels der Filamentzusammensetzung durch Eintauchen des Grünkörpers in ein Lösungsmittel;
d) Sintern des Objekts von Schritt (b) oder Schritt (c) durch Erhitzen, was zum Formkörper führt; und
e) optional Glätten des gedruckten geformten Grünkörpers von Schritt (b) und/oder des Formkörpers von Schritt (d).

11. Verfahren nach Anspruch 10, wobei das Lösungsmittel von Schritt (c) ausgewählt wird aus einer Gruppe bestehend aus Aceton, Hexan, Heptan, Gasolin, Ethylacetat, Ethanol, Methanol, Propanol oder Wasser.

12. Verfahren nach Anspruch 10 oder Anspruch 11, wobei der Glättungsschritt (d) durch Kontaktieren der Oberfläche des geformten Grünkörpers von Schritt (b) und/oder der Oberfläche des Formkörpers von Schritt (d) mit einem Lösungsmittel erfolgt ausgewählt aus Hexan, Heptan, Octan und Gemischen davon; Gasolin, Testbenzin, Benzol; Toluol; Ortho-, Para- oder Meta-Dimethylbenzol und Gemischen davon; Tetrahydrofuran und 2-Methyltetrahydrofuran.

13. Verfahren nach einem der Ansprüche 10 bis 12, wobei das Sintern durch Erhitzen auf eine Temperatur erfolgt, die im Bereich von etwa 800 °C bis etwa 1700 °C liegt.

## Revendications

1. Composition pour impression 3D, ladite composition étant sous forme de filament et comprenant :
- 45 à 60 % (v/v) d'une poudre métallique et/ou céramique choisi parmi les poudres céramiques comprenant ou étant constituées d'un ou plusieurs carbures, les sulfures, les halogénures, les oxydes, les hydroxydes, les carbonates, borates, sulfates, chromates, nitrates, molybdates, tungstates, phosphates, arséniates, vanadates, silicates et aluminosilicates; et les poudres métalliques comprenant ou constituées d'un ou plusieurs composants choisis parmi les métaux alcalins, les métaux alcalino-terreux, les lanthanides, les actinides, les métaux de transition, les métaux pauvres, les métalloïdes, les oxydes métalliques, les carbures métalliques, les borures métalliques et les nitrures métalliques;
- 7 % à 25% (v/v) d'un liant qui est un ou plusieurs composants choisis parmi les parabènes, la paraffine, les esters, les acides carboxyliques, les phénols, les diphénols, les alcools gras, le sucre, les polymères tels que les polyoléfines, les polyacrylates, les polyméthacrylates, les poly(alkylène glycol)s, les polyamides, les polyvinyliques, les polystyrènes polyacétals, les polyesters et leurs copolymères; et
- Au moins 5 % (v/v) d'un mélange de poly(éthylène-acétate de vinyle) à proportion moyenne et élevée d'acétate de vinyle; en volume par rapport la composition totale, dans laquelle:
• Le poly(éthylène-acétate de vinyle) à proportion moyenne d'acétate de vinyle comprend de 4 % à 30 % (p/p) de proportion en acétate de vinyle, par rapport au poids du poly(éthylène-acétate de vinyle);
• Le poly(éthylène-acétate de vinyle) à proportion élevée d'acétate de vinyle comprend au moins 35 % (p/p) de proportion en acétate de vinyle, par rapport au poids du poly(éthylène-acétate de vinyle).

2. La composition selon la revendication **1,** dans laquelle le mélange de polyéthylèneacétate de vinyle) à proportion moyenne et élevée d'acétate de vinyle est en quantité allant de 10% à 48% (v/v), de préférence de 13% à 37% (v/v) en volume par rapport à la composition totale.

3. La composition selon la revendication **1** ou la revendication **2,** dans laquelle la proportion moyenne à élevée d'acétate de vinyle est dans un rapport volumique de 3:1 à 1:1.

4. La composition selon l'une quelconque des revendications **1** à **3,** dans laquelle le poly(éthylène-acétate de vinyle) est un mélange d'un poly(éthylène-acétate de vinyle) comprenant environ 28 % (p/p) de proportion d'acétate de vinyle; et de poly(éthylène-acétate de vinyle) comprenant environ 40 % (p/p) de proportion d'acétate de vinyle, par rapport au poids du poly(éthylène-acétate de vinyle).

5. La composition selon l'une quelconque des revendications **1** à **4,** dans laquelle la poudre métallique et/ou céramique présente une surface spécifique allant de 0.5 à 30 m²/g, mesurée par un analyseur de surface, ledit analyseur utilisant une méthode de sorption de gaz.

6. La composition selon l'une quelconque des revendications **1** à **5,** dans laquelle le filament présente un diamètre de 1,75 ou 2,75 mm.

7. La composition selon l'une quelconque des revendications **1** à **6,** dans laquelle le filament présente une dureté Shore A d'au moins 85 à 20°C.

8. Une bobine de filament comprenant au moins une composition telle que décrite selon l'une quelconque des revendications **1** à **7.**

9. Une imprimante 3D pour la fabrication de corps façonnés, ladite imprimante 3D comprenant la composition selon l'une quelconque des revendications **1** à **7,** ou la bobine de filament selon la revendication **8.**

10. Procédé pour produire un corps façonné, ledit procédé comprenant :
(a) alimenter une imprimante de modélisation 3D, de préférence une imprimante de modélisation par dépôt de fusion, avec un filament tel que décrit dans l'une quelconque des revendications **1** à **7;** puis
(b) imprimer le corps vert façonné ; puis
(c) éventuellement délianter le corps vert en éliminant le liant de la composition de filaments en immergeant le corps vert dans un solvant ;
(d) Fritter l'objet de l'étape (b) ou de l'étape (c) par chauffage, conduisant au corps façonné; et
(e) éventuellement lisser le corps façonné vert imprimé de l'étape (b) et/ou le corps façonné de l'étape (d).

11. Le procédé selon la revendication **10,** dans lequel le solvant de l'étape (c) est choisi parmi l'acétone, l'hexane, l'heptane, l'essence, l'acétate d'éthyle, l'éthanol, le méthanol, le propanol ou l'eau.

12. Le procédé selon la revendication **10** ou la revendication **11,** dans lequel le lissage de l'étape (d) est obtenu en mettant en contact la surface du corps vert façonné de l'étape (b) et/ou la surface du corps façonné de l'étape (d) avec un solvant choisi parmi l'hexane, l'heptane, l'octane et leurs mélanges; l'essence, le «white spirit », le benzène; le toluène; l'ortho-, para-, ou méta- diméthylbenzène et leurs mélanges; le tétrahydrofurane et le 2-méthyltétrahydrofurane.

13. Le procédé selon l'une quelconque des revendications **10** à **12,** dans lequel le frittage est obtenu en chauffant à une température allant d'environ 800°C à environ 1700°C.
